(19) Europäisches Patentamt
European Patent Office
Office européen des brevets

(11) **EP 2 086 096 A1**

(12) **EUROPEAN PATENT APPLICATION**

(43) Date of publication:
**05.08.2009 Bulletin 2009/32**

(51) Int Cl.:
***H02M 3/07*** (2006.01)

(21) Application number: **08275002.7**

(22) Date of filing: **30.01.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Purcell, Matthew**<br>  **Edinburgh, EH12 7LZ (GB)**<br>• **El Hachimi, Mhamed**<br>  **Edinburgh, EH4 3BH (GB)** |
| (71) Applicant: **STMicroelectronics (Research & Development) Limited**<br>**Marlow,**<br>**Buckinghamshire SL7 1YL (GB)** | (74) Representative: **Hartnett, Margaret Kathleen**<br>**Murgitroyd & Company**<br>**Scotland House**<br>**165-169 Scotland Street**<br>**GB-Glasgow G5 8PL (GB)** |

(54) **Regulated charge pump circuit and method of operating a regulated charge pump circuit**

(57)     A regulated charge pump circuit (100) comprising a charge pump (110) configured to generate a primary output signal (Vout) on receipt of a switching signal from a switching signal generating means (112,114), characterised in that the circuit (100) further comprises a comparison means (32) adapted to:

compare the primary output signal (Vout) with a reference value (Vref); and depending on the difference therebetween

produce a control signal (I,V) which is transmitted to the switching signal generating means (112,114) to modify a frequency of the switching signal.

Fig. 4

**Description**

**Field of the invention**

The present invention relates to a regulated charge pump circuit and method of operating a regulated charge pump circuit.

**Background**

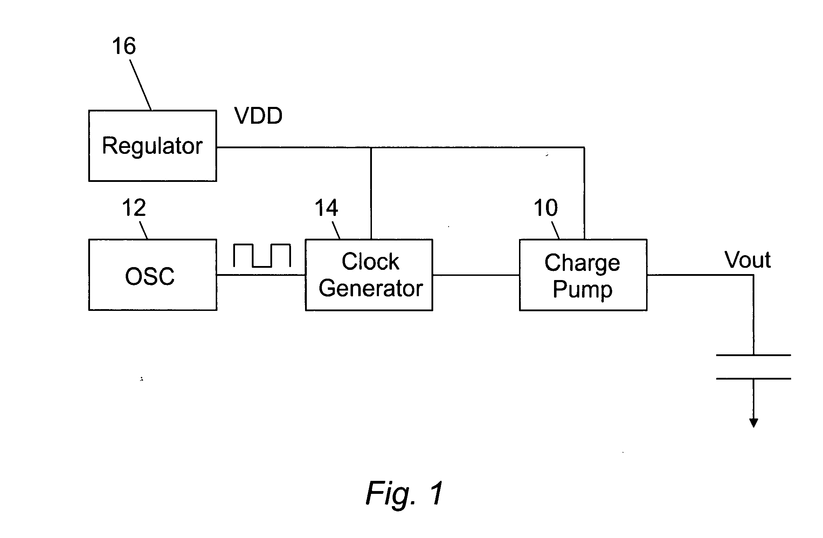

A charge pump is a well-known electronic circuit that uses capacitors as energy store elements to provide a voltage reference. In particular, referring to Figure 1 charge pump circuits 10 use some form of switched capacitors (typically controlled by an oscillator 12 and a clock generator 14) to generate a voltage larger or smaller than a supply voltage 16 from which the charge pump circuit 10 operate.

The current consumption of the switched capacitors in the charge pump circuit 10 depends on the frequency of the clocking signal from the clock generator 14. More particularly, the current (I) consumed by the charge pump circuit 10 is governed by the expression I = CVF, wherein capital C refers to the capacitance of the switched capacitors, V refers to the voltage of a voltage source 16 and F refers to the frequency of the signal from the clock generator 14 and the oscillator 12. Since the clock generator 14 and oscillator 12 operate at a constant frequency, and the charge pump circuit 10 is provided with a constant voltage from the voltage source 16, the current consumption of the charge pump circuit 10 will remain constant.

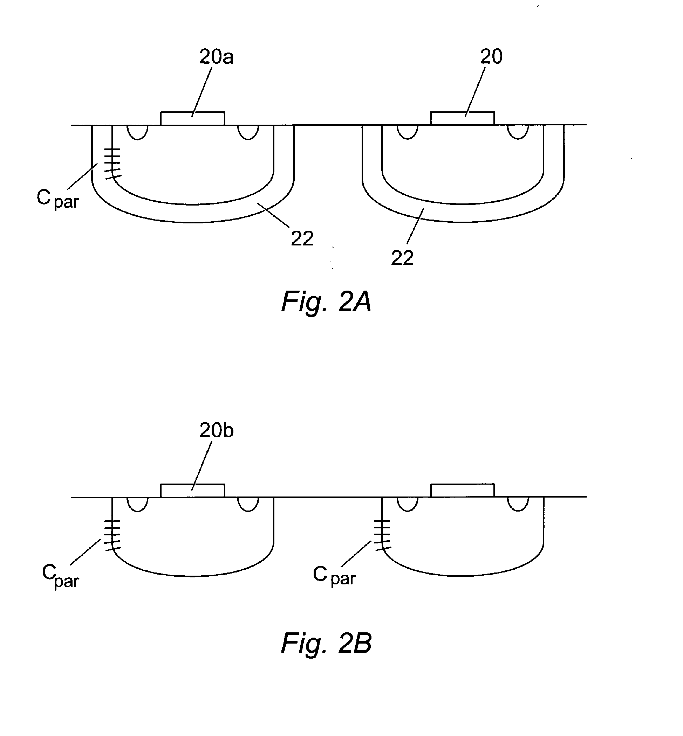

When implemented through a CMOS fabrication process, a charge pump circuit may comprise a plurality of NMOS capacitors or a plurality of PMOS capacitors, each of which is connected to a one or more logic gates (not shown). State changes of the logic gates causes the switching of the capacitors 20, so that the capacitors 20 are effectively charged or discharged. However, the switching operation introduces a considerable amount of noise into the circuit. Referring to Figure 2a, to reduce the deleterious effect of the switching noise NMOS capacitors 20a are isolated therefrom by guard rings 22. Referring to Figure 2b, PMOS capacitors 20b are not isolated by guard rings. In the case of the NMOS capacitors 20a, the guard rings 22 develop a parasitic capacitance ($C_{PAR}$). The PMOS capacitors 20b develop a parasitic capacitance at the junction between the P well (for the capacitor 20b) and the epitaxial material.

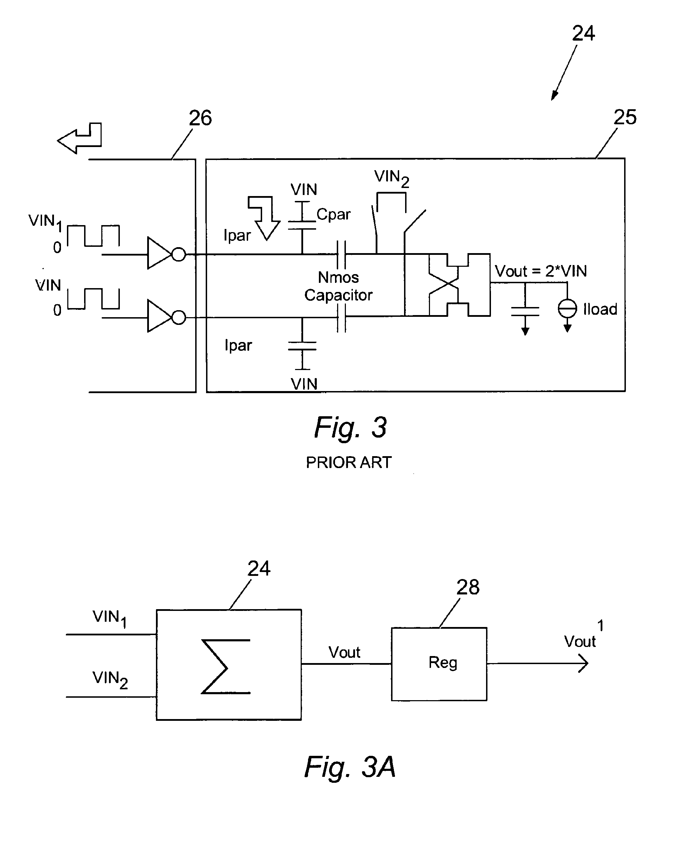

Figure 3 shows a voltage adder circuit 24 comprising a charge pump circuit 25 and a clocking signal generator circuit 26. In use, the voltage adder circuit 24 adds a switching signal ($V_{IN1}$) to a charge pump supply voltage ($V_{IN2}$). In the case of a voltage doubler circuit, $V_{IN1} = V_{IN2}$. Thus, the output voltage ($V_{OUT}$) from the voltage adder circuit 24 is twice the input voltage (ie. $V_{OUT} = 2 * V_{IN1}$ [or $V_{IN2}$]. However, it will be understood that the voltage adder circuit 24 is not limited to the voltage doubler configuration. Instead, the voltage adder circuit 24 can be implemented with a different switching signal voltage and charge supply voltage ($V_{IN1} \neq V_{IN2}$). Similarly, if it is desired to vary the output voltage from the voltage adder circuit 24, it is possible to vary either or both $V_{IN1}$ or $V_{IN2}$ (independently of each other, if necessary). Combining Figures 2a, 2b and 3, it can be seen that the parasitic capacitance ($C_{PAR}$) effectively increases the current consumption of the charge pump circuit (by a factor $I_{PAR}$).

Referring to Figure 3A, in such conventional systems, the voltage adder circuit 24 is typically followed by a regulator 28 (to ensure the supply of a desired voltage). However, such regulators 28 are typically very large circuits.

**Summary of the Invention**

According to a first aspect of the invention there is provided a regulated charge pump circuit comprising a charge pump configured to generate a primary output signal on receipt of a switching signal from a switching signal generating means
**characterised in that** the circuit further comprises a comparison means, adapted to compare the primary output signal with a reference value; and depending on the difference therebetween
produce a control signal which is transmitted to the switching signal generating means to modify a frequency of the switching signal.

According to a second aspect of the invention there is provided a digital video camera comprising a regulated charge pump circuit which in turn comprises a charge pump configured to generate a primary output signal on receipt of a switching signal from a switching signal generating means
**characterised in that** the circuit further comprises a comparison means adapted to:

compare the primary output signal with a reference value; and depending on the difference therebetween
produce a control signal which is transmitted to the switching signal generating means to modify a frequency of the switching signal.

According to a third aspect of the invention there is provided a digital still camera comprising a regulated charge pump circuit which in turn comprises a charge pump configured to generate a primary output signal on receipt of a switching signal from a switching signal generating means
**characterised in that** the circuit further comprises a comparison means adapted to:

> compare the primary output signal with a reference value; and depending on the difference therebetween
> produce a control signal which is transmitted to the switching signal generating means to modify a frequency of the switching signal.

According to a fourth aspect of the invention there is provided a digital endoscope comprising a regulated charge pump circuit which in turn comprises a charge pump configured to generate a primary output signal on receipt of a switching signal from a switching signal generating means
**characterised in that** the circuit further comprises a comparison means adapted to:

> compare the primary output signal with a reference value; and depending on the difference therebetween
> produce a control signal which is transmitted to the switching signal generating means to modify a frequency of the switching signal.

According to a fifth aspect of the invention there is provided an optical mouse comprising a regulated charge pump circuit which in turn comprises a charge pump configured to generate a primary output signal on receipt of a switching signal from a switching signal generating means
**characterised in that** the circuit further comprises a comparison means adapted to:

> compare the primary output signal with a reference value; and depending on the difference therebetween
> produce a control signal which is transmitted to the switching signal generating means to modify a frequency of the switching signal.

According to a sixth aspect of the invention there is provided a method of operating a regulated charge pump circuit comprising the steps of:-

> generating a switching signal from a switching signal generating means;
> transmitting the switching signal to a charge pump; and
> configuring the charge pump to generate a primary output signal on receipt of the switching signal

**characterised in that** the method comprises the further steps of:

> transmitting the primary output signal to a comparison means;
> configuring the comparison means to produce a control signal whose value depends on the difference between the primary output signal and a predefined reference value;
> transmitting the control signal to the switching signal generating means; and
> configuring the switching signal generating means to reduce a frequency of the switching signal in the event the control signal indicates that the primary output signal is larger than the reference value; and increase the frequency of the switching signal in the event the control signal indicates that the primary output signal is less than the reference value.

The regulated charge pump circuit of the preferred embodiment uses capacitors made from CMOS (ie. PMOS or NMOS) transistors. Thus, it is cheap to manufacture, as a standard process can be used. In particular, it does not need extra masks, as would be the case for poly-poly capacitors. Since, the current consumption of the preferred embodiment is reduced, the chip temperature is also reduced. Thus, the overall circuit performance is improved. This is particularly useful for light sensors, in which pixel characteristics are degraded with increased temperature. Similarly, power efficiency is improved by limiting the current charging/discharging of the parasitic capacitors created by the diode associated with the isolated CMOS. This also reduces the noise injected into the substrate.

**Brief description of the drawings**

An embodiment of the invention will herein be described, by way of example only, with reference to the accompanying figures in which:

Figure 1 is a block diagram of a conventional prior art charge pump circuit;

Figure 2a is a cross-sectional view of an NMOS implementation of the charge pump circuit shown in Figure 1;

Figure 2b is a cross-sectional view of a PMOS implementation of the charge pump circuit shown in Figure 1;

Figure 3 is a circuit diagram of a voltage doubler showing a parasitic capacitance caused by guard rings in the CMOS implementation of Figure 2;

Figure 3a is a schematic diagram of the voltage doubler in Figure 3 combined with a regulator circuit;

Figure 4 is a block diagram of a charge pump circuit in accordance with the preferred embodiment; and

Figure 5 is a schematic of the charge pump circuit of the preferred embodiment when used for a voltage doubler.

**Detailed Description**

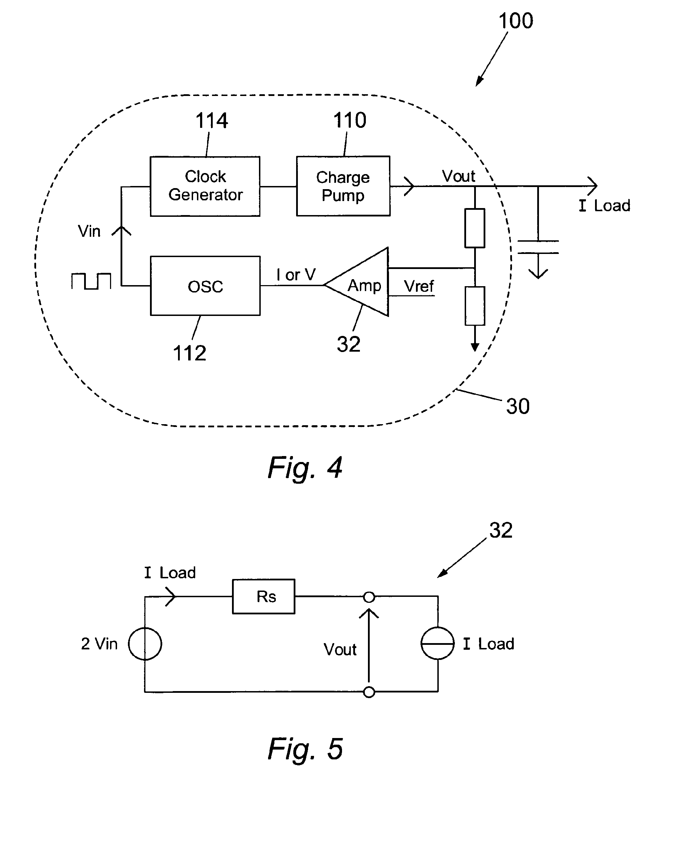

Referring to Figure 4, in common with a traditional charge pump circuit (depicted in Figure 1) the regulated charge pump circuit 100 of the preferred embodiment comprises a clock generator 114, a charge pump 110 and an oscillator 112. However, in contrast with prior art charge pump circuits, the regulated charge pump circuit 100 of the preferred embodiment comprises a feedback loop 30, wherein the oscillator 112 is connected to a comparator 32 so that the oscillator 112 is effectively controlled by a control signal (eg. current or voltage) output by the comparator 32. More particularly, the feedback loop 30 of the preferred embodiment effectively controls the frequency of the output signal from the oscillator 112 (and associated clock generator signal 114) in accordance with a difference between an actual output voltage ($V_{OUT}$) of the charge pump 110 and a reference voltage ($V_{REF}$). The aim of the feedback loop 30 is to control the output frequency of the oscillator 112 so as to optimise the overall current consumption of the regulated charge pump circuit 100. More particularly, the feedback loop 30 of the preferred embodiment enables the oscillator 112 to produce a signal at the minimum frequency required to reach a required output voltage.

The use of the regulated charge pump circuit of the preferred embodiment in a voltage doubler implementation is shown in the schematic of Figure 5. More particularly, as discussed previously, whilst conventional voltage doubler circuits are typically followed by a regulator, the preferred embodiment integrates the regulation function into the charge pump circuit used in the voltage doubler; thereby decreasing the footprint of the system, whilst retaining the desired performance. Referring to Figures 4 and 5 in combination, if the switching resistances of the regulated charge pump circuit 100 are neglected, the output resistance ($R_s$) of the voltage doubler circuit 32 is given by the expression

$$R_s = \frac{1}{2FC}$$ wherein C is the capacitance of the capacitor used in the voltage doubler circuit 32. The output voltage ($V_{OUT}$) of the voltage doubler circuit 32 is twice the input voltage ($V_{IN}$) (which corresponds with the amplitude of the oscillations from the oscillator 112); minus the voltage dropped across the output resistance of the voltage double circuit 32. More particularly, the output voltage from the voltage doubler circuit is given by the expression

$$V_{OUT} = 2V_{IN} - R_S I_{LOAD} = 2V_{IN} - \frac{I_{LOAD}}{2fC}.$$    This    expression    can    be    rearranged    to    yield

$$f = \frac{I_{LOAD}}{2C(2V_{IN} - V_{OUT})}.$$

From this, it can be seen that the frequency of the oscillator circuit 112 is inversely related to the input voltage ($V_{IN}$). Thus, depending on the input voltage ($V_{IN}$) which could be a cheap supply voltage, the frequency used to reach a required output voltage, can be controlled and optimised to make the current consumption of the whole charge pump circuit 30 as low as possible, since the frequency output of the oscillator circuit 112 need only be high when the input voltage is low.

Thus, in use, at the start of the method of preferred embodiment the output voltage from the charge pump circuit is zero. Accordingly, it is necessary to charge the switched capacitors of the regulated charge pump circuit. More particularly, since the reference voltage is considerably larger than the output voltage from the regulated charge pump circuit, the oscillator circuit will operate at a high frequency to cause the capacitor of the regulated charge pump circuit to charge up. Similarly, once the switched capacitors of the regulated charge pump circuit have charged up, (ie. so that the output voltage from the charge pump circuit is larger than the reference voltage), the oscillator can operate at a lower frequency, thereby reducing the current consumption of the charge pump circuit. Thus we have:

$$V_{OUT} = 2V_{IN} - R_S x I_{LOAD} = 2V_{IN} - \frac{I_{LOAD}}{2fC}$$

So depending on the input voltage, which could be the chip supply voltage, the frequency used to reach the required output voltage can be controlled and optimised to make the current consumption of the whole circuit as low as possible. By minimising the current lost through the parasitic capacitance (of the NMOS or PMOS) transistors, for example, when the input voltage is high, the preferred embodiment consumes less power.

An example calculation is provided below to clarify the above discussion.

Let the required output voltage be 4V, wherein the load current is 1 mA, the capacitance of the regulated charge pump circuit is 200 pF; and the input voltage varies from 3V to 3.6V.

In this case, the corresponding frequencies will be:

- Input voltage = 3V: $f = \dfrac{10e^{-3}}{2.(200.10^{-12}).(2x3-4)} = 1.25 MHz$

- Input voltage = 3.6: $f = \dfrac{10e^{-3}}{2.(200.10^{-12}).(2x3.6-4)} = 781.25 KHz$

Thus, the frequency is set as low as possible, and the current consumption of the circuit is optimised for higher voltages. Another way to minimise the clock generator current consumption is to fix its supply voltage.

By its nature, the regulated charge pump circuit of the preferred embodiment can be readily included in an integrated circuit and is applicable to a broad range of devices including digital cameras, mobile phones incorporating a digital camera, and optical mice. It will be appreciated that the man skilled in the art may employ standard techniques in order to implement the preferred embodiment in these and other ways.

Modifications and alterations may be made to the above without departing from the scope of the invention.

## Claims

1.   A regulated charge pump circuit (100) comprising a charge pump (110) configured to generate a primary output signal on receipt of a switching signal from a switching signal generating means (114, 112) **characterised in that** the circuit further comprises a comparison means (32) adapted to:

    compare the primary output signal with a reference value; and depending on the difference therebetween produce a control signal which is transmitted to the switching signal generating means (114,112) to modify a frequency of the switching signal.

2.   The regulated charge pump circuit as claimed in claim 1, wherein the charge pump (110) comprises capacitors that comprise NMOS transistors.

3.   The regulated charge pump circuit as claimed in claim 1 or claim 2, wherein the control signal is a current or voltage signal.

4.   The regulated charge pump circuit as claimed in any one of the preceding claims, wherein a supply voltage to the switching signal generator means (114,112) has a fixed voltage.

5.   A voltage doubler circuit comprising the regulated charge pump circuit as claimed in any one of the preceding claims, wherein the regulated charge pump circuit is adapted to produce an output voltage that is substantially twice the amplitude of the switching signal.

6.   An integrated circuit comprising the regulated charge pump circuit as claimed in any one of claims 1 to 5.

7. A digital video camera comprising a regulated charge pump circuit (100) which in turn comprises a charge pump (110) configured to generate a primary output signal on receipt of a switching signal from a switching signal generating means (114, 112)
**characterised in that** the circuit further comprises a comparison means (32) adapted to:

compare the primary output signal with a reference value; and depending on the difference therebetween produce a control signal which is transmitted to the switching signal generating means (114,112) to modify a frequency of the switching signal.

8. A digital still camera comprising a regulated charge pump circuit (100) which in turn comprises a charge pump (110) configured to generate a primary output signal on receipt of a switching signal from a switching signal generating means (114, 112)
**characterised in that** the circuit further comprises a comparison means (32) adapted to:

compare the primary output signal with a reference value; and depending on the difference therebetween produce a control signal which is transmitted to the switching signal generating means (114,112) to modify a frequency of the switching signal.

9. A digital endoscope comprising a regulated charge pump circuit (100) which in turn comprises a charge pump (110) configured to generate a primary output signal on receipt of a switching signal from a switching signal generating means (114, 112)
**characterised in that** the circuit further comprises a comparison means (32) adapted to:

compare the primary output signal with a reference value; and depending on the difference therebetween produce a control signal which is transmitted to the switching signal generating means (114,112) to modify a frequency of the switching signal.

10. An optical mouse comprising a regulated charge pump circuit (100) which in turn comprises a charge pump (110) configured to generate a primary output signal on receipt of a switching signal from a switching signal generating means (114, 112)
**characterised in that** the circuit further comprises a comparison means (32) adapted to:

compare the primary output signal with a reference value; and depending on the difference therebetween produce a control signal which is transmitted to the switching signal generating means (114,112) to modify a frequency of the switching signal.

11. A mobile phone comprising the digital video camera as claimed in claim 7 or the digital still camera as claimed in claim 8.

12. A method of operating a regulated charge pump circuit (100) comprising the steps of:-

generating a switching signal from a switching signal generating means (114,112);
transmitting the switching signal to a charge pump (110); and
configuring the charge pump (110) to generate a primary output signal on receipt of the switching signal

**characterised in that** the method comprises the further steps of:

transmitting the primary output signal to a comparison means (32);
configuring the comparison means (32) to produce a control signal whose value depends on the difference between the primary output signal and a predefined reference value;
transmitting the control signal to the switching signal generating means (114,112); and
configuring the switching signal generating means (114,112) to reduce a frequency of the switching signal in the event the control signal indicates that the primary output signal is larger than the reference value; and increase the frequency of the switching signal in the event the control signal indicates that the primary output signal is less than the reference value.

EP 2 086 096 A1

*Fig. 1*

Fig. 2A

Fig. 2B

**Fig. 3**

PRIOR ART

**Fig. 3A**

100

114                    110

Clock                  Charge
Generator              Pump

Vout

I Load

Vin

OSC          I or V    Amp    Vref

112                    32

30

*Fig. 4*

32

I Load

Rs

2 Vin              Vout        I Load

*Fig. 5*

**European Patent Office**

**EUROPEAN SEARCH REPORT**

Application Number

EP 08 27 5002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 294 950 B1 (LEE JAE-GOO [KR] ET AL) 25 September 2001 (2001-09-25) * abstract; figure 3 * * column 4, line 30 - column 6, line 19 * ----- | 1-12 | INV. H02M3/07 |
| X | US 5 959 853 A (KOS MAREK JOHN [US]) 28 September 1999 (1999-09-28) * abstract; figure 1 * * column 2, line 55 - column 6, line 40; figures 3,4 * ----- | 1-12 | |
| X | EP 1 014 547 A (FAIRCHILD SEMICONDUCTOR [US]) 28 June 2000 (2000-06-28) * abstract * * column 2, line 2 - column 7, line 49; figure 1 * ----- | 1-12 | |
| X | US 2002/075063 A1 (HWANG CHANGKU [US]) 20 June 2002 (2002-06-20) * paragraphs [0016] - [0022]; figures 4,5 * ----- | 1-12 | |
| X | SUNG-EUN KIM ET AL: "A small ripple regulated charge pump with automatic pumping control schemes" SOLID-STATE CIRCUITS CONFERENCE, 2004. ESSCIRC 2004. PROCEEDING OF THE 30TH EUROPEAN LEUVEN, BELGIUM 21-23 SEPT. 2004, PISCATAWAY, NJ, USA,IEEE, US, 21 September 2004 (2004-09-21), pages 383-386, XP010738567 ISBN: 978-0-7803-8480-4 * the whole document * ----- | 1-12 | **TECHNICAL FIELDS SEARCHED (IPC)** H02M G11C H01L |
| A | US 2003/058030 A1 (MYONO TAKAO [JP]) 27 March 2003 (2003-03-27) * paragraphs [0002] - [0004] * ----- | 7-9,11 | |
| | -/-- | | |

The present search report has been drawn up for all claims

| Place of search | Date of completion of the search | Examiner |
|---|---|---|
| Munich | 17 June 2008 | Braccini, Roberto |

EPO FORM 1503 03.82 (P04C01)

**European Patent Office**

## EUROPEAN SEARCH REPORT

Application Number

EP 08 27 5002

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 691 472 A (STMICROELECTRONICS RES & DEV L [GB]) 16 August 2006 (2006-08-16) * paragraphs [0016], [0017] * ----- | 10 | |

TECHNICAL FIELDS SEARCHED (IPC)

The present search report has been drawn up for all claims

| Place of search | Date of completion of the search | Examiner |
|---|---|---|
| Munich | 17 June 2008 | Braccini, Roberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 27 5002

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2008

| Patent document cited in search report | | Publication date | Patent family member(s) | | Publication date |
|---|---|---|---|---|---|
| US 6294950 | B1 | 25-09-2001 | DE | 10003059 A1 | 08-02-2001 |
| | | | KR | 20010011502 A | 15-02-2001 |
| US 5959853 | A | 28-09-1999 | NONE | | |
| EP 1014547 | A | 28-06-2000 | US | 2001001231 A1 | 17-05-2001 |
| | | | US | 2001001544 A1 | 24-05-2001 |
| | | | US | 2001002881 A1 | 07-06-2001 |
| US 2002075063 | A1 | 20-06-2002 | JP | 2002233135 A | 16-08-2002 |
| US 2003058030 | A1 | 27-03-2003 | NONE | | |
| EP 1691472 | A | 16-08-2006 | US | 2006181333 A1 | 17-08-2006 |